(19) **Europäisches Patentamt / European Patent Office / Office européen des brevets**

(11) **EP 4 769 919 A1**

(12) # EUROPEAN PATENT APPLICATION

(43) Date of publication:
01.07.2026 Bulletin 2026/27

(21) Application number: 25210289.2

(22) Date of filing: 22.10.2025

(51) International Patent Classification (IPC):
H02M 1/00 (2006.01)      H02M 7/5387 (2007.01)
H02M 7/5395 (2006.01)      H02J 3/38 (2026.01)

(52) Cooperative Patent Classification (CPC):
H02M 7/53871; H02J 3/381; H02M 1/0009;
H02M 1/0025; H02M 7/53873; H02M 7/5395

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.12.2024 KR 20240195262

(71) Applicant: Hanwha Solutions Corporation
Jung-gu
Seoul 04541 (KR)

(72) Inventors:
• HYUN, Dong Yub
  04541 Seoul (KR)
• CHA, Jee Yoon
  04541 Seoul (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **METHOD AND APPARATUS FOR CONTROLLING SWITCHES INCLUDED IN INVERTER OF POWER CONVERSION SYSTEM**

(57) Provided are a method and apparatus for controlling switches included in an inverter of a power conversion system. A power conversion apparatus of a photovoltaic power generation system includes a processor configured to obtain a first current value at a first terminal of a filter included in an inverter from a single current sensor, obtain a second current value at a second terminal of the filter included in the inverter based on the first current value, and control a switch according to a pulse width modulation (PWM) method based on the first current value and the second current value.

FIG. 6

EP 4 769 919 A1

**Description**

BACKGROUND

1. Field

The present disclosure relates to a method and apparatus for controlling switches included in an inverter of a power conversion system.

2. Description of the Related Art

In a conventional power conversion system of a photovoltaic power generation system, switches included in an inverter were controlled based on current values measured by two current sensors, which were respectively connected to front and rear ends of a filter included in the inverter.

In the conventional method for controlling switches included in the inverter as described above, two current sensors connected to both ends of the filter included in the inverter were used, which resulted in an increased computational load on a processor due to analog-to-digital converter (ADC) sensing processes and also made the control algorithm more complex.

In addition, the use of two current sensors required installation in the power conversion system, along with the configuration of associated peripheral circuits, which led to increased installation costs.

Accordingly, there is a need for a method and apparatus for controlling switches included in an inverter in a more efficient power conversion system.

The background art described above is technical information retained by the present inventors in order to derive the present disclosure or obtained by the present inventors in the process of deriving the present disclosure, and thus is not necessarily known art disclosed to the general public before the filing of the present application.

SUMMARY

The present disclosure is directed to providing a method and apparatus for controlling switches included in an inverter of a power conversion system using only a single current sensor. The problem to be solved by the present disclosure is not limited to the above-mentioned problem, and other problems and advantages of the present disclosure not mentioned may be understood by the following description and more clearly understood by the embodiments of the present disclosure. In addition, it will be appreciated that the problems and advantages to be solved by the present disclosure may be implemented by means and combinations thereof defined in claims.

According to a first aspect of the present disclosure, there is provided a method for controlling a switch included in an inverter of a power conversion system, the method including obtaining a first current value at a first terminal of a filter included in the inverter from a single current sensor, obtaining a second current value at a second terminal of the filter based on the first current value, and controlling the switch according to a pulse width modulation (PWM) method based on the first current value and the second current value.

According to a second aspect of the present disclosure, there is provided a power conversion apparatus of a photovoltaic power generation system including a processor configured to obtain a first current value at a first terminal of a filter included in an inverter from a single current sensor, obtain a second current value at a second terminal of the filter based on the first current value, and control a switch according to a pulse width modulation (PWM) method based on the first current value and the second current value.

According to a third aspect of the present disclosure, there is provided a computer-readable recording medium on which a program for executing the method of the first aspect on a computer is recorded.

BRIEF DESCRIPTION OF THE DRAWINGS

Embodiments of the present disclosure will be described below with reference to the accompanying drawings, in which like reference numerals denote like elements, and the present disclosure is not limited to the illustrated embodiments, as shown in the following drawings:

FIG. 1 is an exemplary diagram for schematically describing a power supply system;
FIG. 2 illustrates an example of a power supply system according to an embodiment;
FIG. 3 illustrates an example of a power supply system according to another embodiment;
FIG. 4 illustrates an example of a power supply system according to another embodiment;
FIG. 5 is an exemplary diagram for describing a process of controlling a switch included in an inverter when a voltage sensor is connected to a second terminal of a filter according to an embodiment;
FIG. 6 is an exemplary diagram for describing a process of controlling a switch included in an inverter when a voltage sensor is connected to a first terminal of a filter according to an embodiment;
FIG. 7 is an exemplary diagram for describing a process of obtaining a second current value according to an embodiment;
FIG. 8 is a flowchart for describing a process of obtaining a second current value according to an embodiment; and
FIG. 9 is a flowchart for describing a method for controlling the switch included in the inverter according to an embodiment.

DETAILED DESCRIPTION

Advantages and features of the present disclosure, and methods of achieving the same will become clear with reference to the detailed description of embodiments taken in conjunction with the accompanying drawings. However, it should be understood that the present disclosure is not limited to the embodiments presented below, but may be implemented in various other forms and includes all transformations, equivalents, and substitutes included in the spirit and scope of the present disclosure. The embodiments presented below are provided to complete the present disclosure and to fully inform those skilled in the art to which the present disclosure belongs. In explaining the present disclosure, if it is determined that a detailed description of a related known technology may obscure the gist of the present disclosure, the detailed description will be omitted.

Terms used herein are only used to describe particular embodiments, and are not intended to limit the present disclosure. Unless otherwise defined, all terms used herein have the same meaning as commonly understood by one having ordinary skill in the art to which the present disclosure belongs.

In the present specification, singular forms are intended to include plural forms as well, unless the context clearly indicates otherwise. Further, the terms "include" or "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

In addition, terms including ordinal numbers such as " first " or " second " used herein may be used to describe various components, but the components should not be limited by the terms. These terms are used only for the purpose of distinguishing one component from another component.

Phrases such as "in an embodiment," " according to an embodiment", "relating to an embodiment," "according to an implementation of an embodiment," and the like appearing in various places in the present specification are not necessarily all referring to the same embodiment. Further, throughout the specification, "embodiment" is a random division for easily describing the disclosure in the present disclosure, and each embodiment need not be mutually exclusive. For example, configurations mentioned for the purpose of describing one embodiment may be applied and implemented in other embodiments and may be changed and applied and implemented without departing from the idea and scope of the present disclosure.

Some embodiments of the present disclosure may be represented by functional block configurations and various processing operations. Some or all of the functional blocks may be implemented by various numbers of hardware and/or software configurations that perform particular functions. For example, the functional blocks of the present disclosure may be implemented by one or more microprocessors or by circuit configurations for a certain function.

For example, the functional blocks of the present disclosure may be implemented in various programming or scripting languages. The functional blocks may be implemented by algorithms executed in one or more processors. In addition, the present disclosure may employ conventional techniques for electronic environment setting, signal processing, and/or data processing. Terms such as "mechanism," "element," "means," and "configuration" can be used broadly and are not limited to mechanical and physical configurations. In addition, terms such as "unit," "-or/-er," and "model" denote a unit that processes at least one function or operation, which may be implemented in hardware or software, or implemented in a combination of hardware and software.

In addition, a connection line or a connection member between components shown in the drawings is merely a functional connection and/or a physical or circuit connection. In an actual device, connections between components may be represented by various functional connections, physical connections, or circuit connections that are replaceable or added.

In addition, some components in the drawings may be shown to be exaggerated in size or proportion. Moreover, components shown in one drawing may not be shown in other drawings.

Further, the term "first current value" refers to a value of a current flowing through a first terminal of a filter included in an inverter. For example, the first terminal may be a front end of the filter.

In addition, the term "second current value" refers to a value of a current at a second terminal of the filter included in the inverter. For example, the second terminal may be a rear end of the filter.

Hereinafter, the present disclosure will be described in detail with reference to the accompanying drawings.

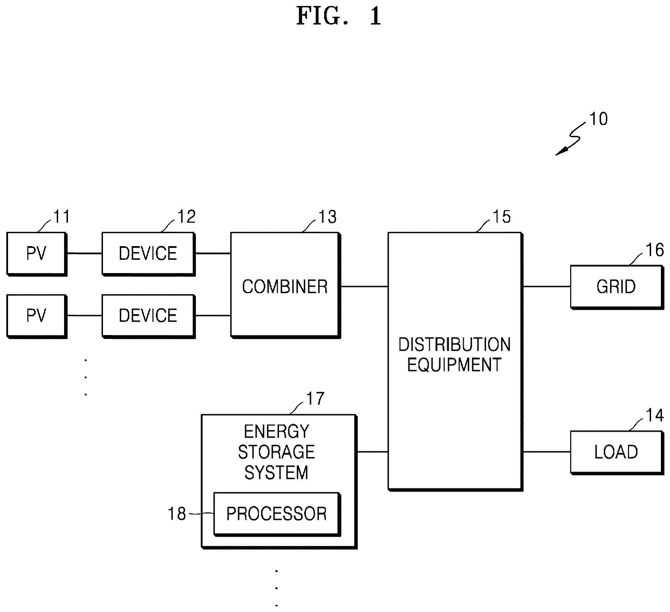

FIG. 1 is an exemplary diagram for schematically describing a power supply system.

Referring to FIG. 1, a power supply system 10 may include a photovoltaic (PV) module 11, a device 12, a load 14, and/or distribution equipment 15. The power supply system 10 may be connected to an external power grid 16.

At least one photovoltaic module 11 may be installed on a building roof, exterior wall, or the like, and may generate power. A plurality of photovoltaic modules 11 may be connected together to form a photovoltaic module array.

The photovoltaic module 11 may be connected to the device 12. For example, at least one device 12 may be connected to each photovoltaic module 11. In an example, when one device 12 is connected to each photovoltaic module 11, the number of devices 12 included in the power supply system 10 may be equal to the number of photovoltaic modules 11.

The device 12 may be a PCS (Power Conditioning System or Power Conversion System), that performs power conversion on the power generated by the photovoltaic module 11. For example, the device 12 may perform a predetermined conversion on the power generated by the photovoltaic module 11 and supply the converted power to other components (e.g., the power grid 16, the load 14, and/or the like) of the power supply system 10.

In some embodiments, the device 12 may be a module-level power electronics (MLPE). For example, the device 12 may be an optimizer or a microinverter (MI).

In an example, when the device 12 is an optimizer, the device 12 may regulate power generated by the photovoltaic module 11 and output the regulated power to an inverter (e.g., a string inverter). A current converted by the inverter (e.g., from direct current (DC) current to alternating current (AC) current) may be output to the power grid 16 or the load 14.

In another example, when the device 12 is a microinverter, the device 12 may convert power generated by the photovoltaic module 11 (e.g., from DC current to AC current). The current converted by the device 12 may be output to the power grid 16 or the load 14.

As necessary, the power supply system 10 may further include a combiner 13. At least some of the devices 12 may be connected to the distribution equipment 15 via the combiner 13. For example, power output from a plurality of devices 12 may be combined into a single output at the combiner 13 and supplied to the distribution equipment 15.

In some embodiments, the devices 12 may be connected to the distribution equipment 15 via a power path that does not include the combiner 13. At least one of the devices 12 may be connected to the distribution equipment 15 via the power path that does not include the combiner 13, and at least one other device 12 may be connected to the distribution equipment 15 via the combiner 13.

The combiner 13 may perform control of voltage, current, and/or power output from the device 12 based on power supply states of the photovoltaic module 11, the device 12, and/or the power grid 16, and the operation mode of the combiner 13 may be set to a diagnostic mode, an operation mode, or the like.

In some embodiments, the combiner 13 may include an energy management system (EMS) that controls the operation of the combiner 13. The EMS may perform control of voltage, current, and/or power supplied to or output from the combiner 13 based on power supply states of the photovoltaic module 11, the device 12, and/or the power grid 16, and may set the operation mode of the combiner 13 to a diagnostic mode, an operation mode, or the like.

The load 14 refers to an object installed in an electricity consumer such as a residential building, commercial facility, or factory, and operating by receiving at least one of energy generated by the photovoltaic module 11, energy stored in an energy storage system 17, and energy supplied from the power grid 16. For example, when the electricity consumer to which power is supplied is a residential building, the load 14 may include home appliances such as a washing machine, a refrigerator, or a television (TV).

The power grid 16 may include an infrastructure system for generating, transmitting, and distributing power. For example, the power grid 16 may include infrastructure systems such as power plants, substations, and power line networks. In some embodiments, the power grid 16 may deliver electric energy generated at a power plant to the power supply system 10 or deliver surplus power generated by the power supply system 10 to the outside.

For example, commercial power transmitted from the power grid 16 through utility poles may be supplied to electricity consumers via a transformer. For example, the power supply system 10 may also be implemented as an off-grid system that is not connected to the power grid 16.

In some embodiments, the power supply system 10 may further include at least one energy storage system 17. As necessary, the power supply system 10 may include a plurality of energy storage systems 17. The energy storage system 17 may receive and store power generated by the photovoltaic module 11 and/or power delivered from the power grid 16. By storing power and supplying the power to the load 14 when needed, the energy storage system 17 may supply power efficiently.

The energy storage system 17 may include a battery for storing power and a power conversion module. The battery may be provided with a battery management system (BMS) that monitors the state of charge (SOC), state of health (SOH), voltage, and/or current of the battery, performs diagnosis on the battery, and provides safety functions such as current interruption.

In some embodiments, the power conversion module may be a power conversion system (PCS) configured to perform power conversion between a battery side and an opposite side. For example, the PCS may perform conversion between DC current on the battery side and AC current on the opposite side. In an example, the PCS may include a bidirectional DC-DC converter connected to the battery for voltage conversion, and a bidirectional inverter that connects the DC-DC converter to the outside of the energy storage system 17.

According to an embodiment, the energy storage system 17 may include a processor 18. In addition, the processor 18 may control switches included in the inverter. For example, the processor 18 may be included in the power conversion module of the energy storage system 17. Alternatively, the processor 18 may be included in the energy storage system 17 as a separate module independent of the power conversion module.

However, the processor 18 is not limited to being included in a specific power conversion module or a specific power conversion device, and may be included in various power conversion devices or modules, including a microinverter or a string inverter.

The processor 18 may process instructions of a computer program by performing basic arithmetic, logic, and input/output operations.

For example, the processor 18 may perform at least a portion of data analysis, processing, and result information generation using at least one of rule-based logic or artificial intelligence (AI) algorithms such as machine learning, neural networks, or deep learning algorithms. Examples of neural networks may include neural network models based on architectures such as a convolutional neural network (CNN), a deep neural network (DNN), and a recurrent neural network (RNN).

For example, the processor 18 may be implemented as an array of multiple logic gates, or as a combination of a general-purpose microprocessor and a memory in which a program executable by the microprocessor is stored. For example, the processor 18 may include a general-purpose processor, a central processing unit (CPU), a microprocessor, a digital signal processor (DSP), a controller, a microcontroller, a state machine, or the like.

In some environments, the processor 18 may include an application-specific integrated circuit (ASIC), a programmable logic device (PLD), a field-programmable gate array (FPGA), or the like. For example, the processor 18 may refer to a combination of processing devices such as, a combination of a DSP and a microprocessor, a combination of a plurality of microprocessors, a combination of one or more microprocessors in conjunction with a DSP core, or a combination of any other such configurations.

In some embodiments, the energy storage system 17 may further include an energy management system (EMS) that controls the operation of the energy storage system 17. The EMS may perform control of voltage, current, and/or power supplied to or output from the energy storage system 17 based on power supply states of the battery and/or the power grid 16, and may set the operation mode of the energy storage system 17 to a diagnostic mode, an operation mode, or the like.

As necessary, the EMS coupled to a predetermined component of the power supply system 10 may control not only the operation of the corresponding component, but also the operation of other components of the power supply system 10. For example, the EMS coupled to the combiner 13 or the energy storage system 17 may control operations of both the combiner 13 and the energy storage system 17.

In some embodiments, the distribution equipment 15 may provide electrical connections between components of the power supply system 10 and may control a power flow within the power supply system 10. For example, the distribution equipment 15 may electrically connect the photovoltaic module 11 to the load 14. In an example, by being connected to the device 12 coupled to the photovoltaic module 11, the distribution equipment 15 may electrically connect the photovoltaic module 11 to the load 14. As necessary, the distribution equipment 15 may be further connected to at least one of the energy storage system 17 and the power grid 16.

For example, the distribution equipment 15 may be a distribution panel that distributes power within the power supply system 10. In an example, the distribution equipment 15 may be a master service panel (MSP) that distributes power generated by the photovoltaic module 11 to the load 14 or the like.

In another example, the distribution equipment 15 may be a main controller that performs power distribution within the power supply system and controls each of the devices 12. In an example, the main controller may include a switch, a circuit breaker, and a control unit. The switch, the circuit breaker, and the control unit may be implemented as separate devices, or at least some thereof may be included in a single device.

The main controller may include a switch that controls electrical connections between components connected to the main controller, such as the device 12 and the load 14. For example, the main controller may include a relay, a power semiconductor, or the like that provides or interrupts electrical connections to the device 12 and/or the energy storage system 17 based on an operating status of each component of the power supply system 10.

The main controller may perform a rapid shutdown to stop power generation of the photovoltaic module 11 in an emergency situation, such as the occurrence of an overcurrent in the power supply system 10. To this end, the main controller may include a circuit breaker that disconnects the connection between the device 12 and the load 14.

The main controller may include a control unit that generally controls the operation of the main controller. The control unit may also control the operation of other components of the power supply system 10, such as the device 12 or the energy storage system 17, in addition to the main controller.

The control unit may perform control of voltage, current, and/or power that is output from or supplied to each component, based on power supply states of the photovoltaic module 11, the device 12, the combiner 13, the load 14, the power grid 16, and/or the energy storage system 17. In addition, the control unit may set the operation mode of the main controller, the device 12, and/or the energy storage system 17 to a diagnostic mode, an operation mode, or the like.

For example, the control unit may control the photovoltaic module 11, the device 12, the combiner 13, and/or the energy storage system 17 based on the state of the power supply system 10. In an example, the control unit may control other components of the power supply system 10 by enabling the main controller to perform communication with other components of the power supply system 10 (e.g., the device 12). Communication between the main controller and other components of the power supply system 10 may be performed using a power line communication (PLC) method, but the present disclosure is not limited thereto.

In an example, the control unit may control the device 12 based on a power generation state of the photovoltaic module 11. For example, the main controller may receive a control command from a server that monitors the power generation state of the photovoltaic module 11, and the control unit may control the device 12 according to the control command.

When power supply from the power grid 16 is not stable (e.g., in an off-grid situation or the like), the main controller may supply power to at least some of the loads 14. For example, when power supply from the power grid 16 is not stable, the main controller may preferentially supply power generated by the photovoltaic module 11 and/or power stored in the energy storage system 17 to a backup load that has a relatively higher need for stable power supply.

In some embodiments, the power supply system 10 may further include an auxiliary power generation device (e.g., a diesel generator or the like) that generates power in a manner separate from photovoltaic generation. For example, the auxiliary power generation device may be additionally connected to the distribution equipment 15. When the photovoltaic module 11 and the energy storage system 17 alone cannot supply sufficient power to the backup load due to environmental factors such as time of day or weather, the main controller may supply power generated by the auxiliary power generation device to the backup load.

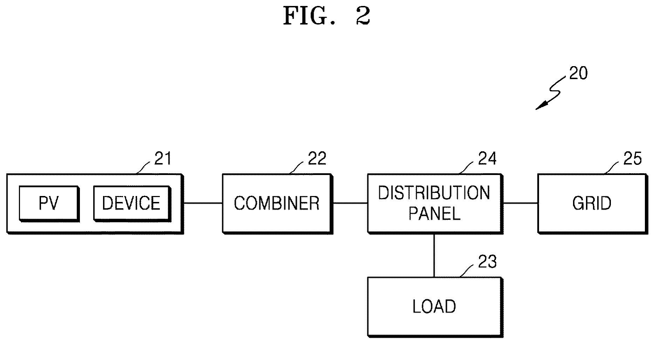

By combining at least some of the components described above, the power supply system 10 may be implemented in various forms. Hereinafter, various embodiments of the power supply system 10 will be described with reference to FIGS. 2 to 4. However, the implementation of the power supply system 10 is not limited to the embodiments described below.

FIG. 2 illustrates an example of a power supply system according to an embodiment.

Referring to FIG. 2, a power supply system 20 according to an embodiment may include a photovoltaic power generation device 21, a combiner 22, a load 23, and a distribution panel 24. In addition, the power supply system 20 may be connected to an external power grid 25. In some embodiments, the combiner 22, the load 23, and the power grid 25 shown in FIG. 2 may respectively correspond to the combiner 13, the load 14, and the power grid 16 shown in FIG. 1. In addition, the distribution panel 24 shown in FIG. 2 may be the same as the distribution panel described above with reference to FIG. 1.

The photovoltaic power generation device 21 may include the photovoltaic module 11 and the device 12 shown in FIG. 1. For example, the photovoltaic power generation device 21 may include a photovoltaic module provided with a microinverter or an optimizer. When the device does not convert DC current into AC current, the photovoltaic power generation device 21 may further include a separate inverter that performs DC-to-AC conversion.

According to an embodiment, the processor 18 may be included not only in the energy storage system 17 but also in the microinverter within the photovoltaic power generation device 21. Alternatively, the processor 18 may be included in the photovoltaic power generation device 21 as a separate module independent of the microinverter.

The combiner 22 may electrically connect the photovoltaic power generation device 21 to the distribution panel 24. A plurality of photovoltaic power generation devices 21 may be connected to one combiner 22. For example, the combiner 22 may combine power output from the plurality of photovoltaic power generation devices 21 into a single output and supply the combined power to the distribution panel 24.

Through this configuration, the power supply system 20 may supply power generated by the photovoltaic power generation device 21 to the load 23 and/or the power grid 25 via the distribution panel 24.

In some embodiments, the combiner 22 may perform control of voltage, current, and/or power output from the photovoltaic power generation device 21 based on power supply states of the photovoltaic power generation device 21, the load 23, and/or the power grid 25, and the operation mode of the combiner 22 may be set to a diagnostic mode, an operation mode, or the like.

For example, at least one photovoltaic power generation device 21 may be connected to the distribution panel 24 via a power path that does not include the combiner 22. For example, at least one photovoltaic power generation device 21 may be connected to the distribution panel 24 via a power path that does not include the combiner 22, while at least one other photovoltaic power generation device 21 may be connected to the distribution panel 24 via the combiner 22.

In an embodiment, the power supply system 20 may further include a sub-panel (not shown) connected to the distribution panel 24. In this case, at least one photovoltaic power generation device 21 may be connected to the sub-panel via the combiner 22, and at least one other photovoltaic power generation device 21 may be directly connected to the sub-panel.

By including the sub-panel that provides additional capacity, the power supply system 20 may increase the total generation capacity of the photovoltaic power generation devices 21 that can be integrated into the power supply system 20.

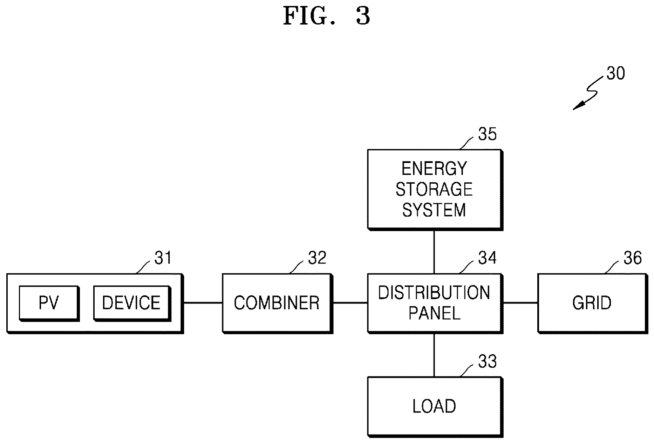

FIG. 3 illustrates an example of a power supply system according to another embodiment.

Referring to FIG. 3, a power supply system 30 according to an embodiment may include a photovoltaic power generation device 31, a combiner 32, a load 33, a distribution panel 34, and an energy storage system 35. In addition, the power supply system 30 may be connected to an external power grid 36.

The power supply system 30 shown in FIG. 3 may be a configuration in which at least one energy storage system 35 is additionally provided to the power supply system 20 shown in FIG. 2. In an embodiment, the energy storage system 35 may be connected to the distribution panel 34 and may be charged or discharged. In another embodiment, the energy storage system 35 may be connected to the combiner 32 and may be charged or discharged.

By additionally including the energy storage system 35 in the power supply system 30, power stored in the energy storage system 35 may be used to supply power to the load 33 when the photovoltaic power generation device 31 alone cannot meet the power demand of the load 33. In addition, when the power generated by the photovoltaic power generation device 31 exceeds the amount of power required to supply power to the load 33, the excess power may be stored in the energy storage system 35. In some embodiments, when the state of charge of the energy storage system 35 is below a threshold and the power generated by the photovoltaic power generation device 31 does not exceed the amount of power required for the load 33, power supplied from the power grid 36 may be used to charge the energy storage system 35.

Thus, the power supply system 30 may efficiently supply power to the load 33 by using the energy storage system 35.

In some embodiments, the combiner 32 may perform control of voltage, current, and/or power output from the photovoltaic power generation device 31 based on power supply states of the photovoltaic power generation device 31, the load 33, and/or the power grid 36, and the operation mode of the combiner 32 may be set to a diagnostic mode, an operation mode, or the like.

In some embodiments, the energy storage system 35 may perform control of voltage, current, and/or power supplied to or output from the energy storage system 35 based on power supply states of the photovoltaic power generation device 31, the load 33, and/or the power grid 36, and the operation mode of the energy storage system 35 may be set to a diagnostic mode, an operation mode, or the like.

In some embodiments, the energy storage system 35 may include the processor 18. In addition, the processor 18 may control switches included in an inverter. For example, the processor 18 may be included in a power conversion module of the energy storage system 35. Alternatively, the processor 18 may be included in the energy storage system 35 as a separate module independent of the power conversion module.

In an embodiment, the power supply system 30 may further include a sub-panel (not shown) connected to the distribution panel 34. In this case, at least one photovoltaic power generation device 31 may be connected to the sub-panel via the combiner 32, and at least one other photovoltaic power generation device 31 may be directly connected to the sub-panel.

In some embodiments, at least one energy storage system 35 may be integrated into the power supply system 30 by being connected to the combiner 32, the distribution panel 34, or the sub-panel.

For example, at least one photovoltaic power generation device 31 may be connected to the distribution panel 34 via a power path that does not include the combiner 32. For example, at least one photovoltaic power generation device 31 may be connected to the distribution panel 34 via a power path that does not include the combiner 32, while at least one other photovoltaic power generation device 31 may be connected to the distribution panel 34 via the combiner 32.

In an embodiment, at least one photovoltaic power generation device 31 may be connected to the sub-panel via the combiner 32, and at least one other photovoltaic power generation device 31 may be directly connected to the sub-panel.

By including the sub-panel that provides additional capacity, the power supply system 30 may increase the total generation capacity of photovoltaic power generation devices 31 that can be integrated into the power supply system 30.

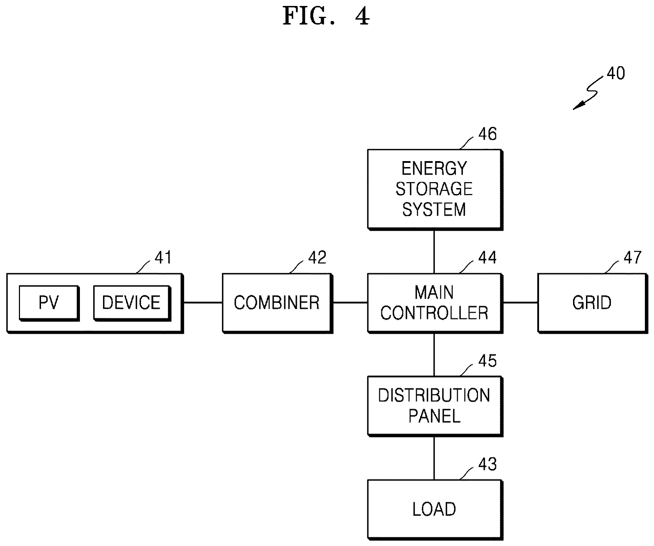

FIG. 4 illustrates an example of a power supply system according to another embodiment.

Referring to FIG. 4, a power supply system 40 according to an embodiment may include a photovoltaic power generation device 41, a combiner 42, a load 43, a main controller 44, a distribution panel 45, and an energy storage system 46. In addition, the power supply system 40 may be connected to an external power grid 47.

In some embodiments, the photovoltaic power generation device 41, the combiner 42, the load 43, and the energy storage system 46 shown in FIG. 4 may respectively correspond to the photovoltaic power generation device 31, the combiner 32, the load 33, and the energy storage system 35 shown in FIG. 3. In addition, the main controller 44 shown in FIG. 4 may correspond to the main controller described above with reference to FIG. 1.

In some embodiments, the energy storage system 46 may include the processor 18. In addition, the processor 18 may control switches included in an inverter. For example, the processor 18 may be included in a power conversion module of the energy storage system 46. Alternatively, the processor 18 may be included in the energy storage system 46 as a separate module independent of the power conversion module.

The combiner 42 may electrically connect at least one photovoltaic power generation device 41 to the main controller 44. For example, the combiner 42 may combine power output from at least one photovoltaic power generation device 41 into a single output and supply the combined power to the main controller 44.

The main controller 44 may electrically connect the combiner 42, the distribution panel 45, and the power grid 47 to each other. In addition, the main controller 44 may connect the above-described components to the energy storage system 46 and/or an auxiliary power generation device (e.g., a diesel generator or the like). For example, the main controller 44 may output power supplied from the combiner 42 to the distribution panel 45, the energy storage system 46, and/or the power grid 47. The main controller 44 may also output power supplied from the power grid 47 to the distribution panel 45 or the energy storage system 46. In addition, the main controller 44 may output power supplied from the energy storage system 46 to the distribution panel 45.

The distribution panel 45 may electrically connect the main controller 44 to at least one load 43. Through this configuration, the power supply system 40 may supply power generated by the photovoltaic power generation device 41 to the load 43 via the distribution panel 45.

By including the main controller 44, the power supply system 40 may integrate a plurality of energy storage systems 46, the auxiliary power generation device, and/or the like into the power supply system 40, thereby enabling stable power supply. In addition, even in an off-grid environment in which stable power cannot be supplied from the power grid 47, the power supply system 40 may reliably supply power to the load 43, such as a backup load.

In some embodiments, the main controller 44 may perform control of voltage, current, and/or power that is output from or supplied to each component, based on states of the photovoltaic power generation device 41, the load 43, the energy storage system 46, and/or the power grid 47, and the operation mode of the main controller 44, the photovoltaic power generation device 41, and/or the energy storage system 46 may be set to a diagnostic mode, an operation mode, or the like.

In an embodiment, the power supply system 40 may further include a sub-panel (not shown) that is connected to the main controller 44 and is distinct from the distribution panel 45. In this case, at least one backup load, which requires relatively higher power supply stability, among the loads 43 may be connected to the sub-panel, and at least one non-backup load, which requires relatively lower power supply stability, among the loads 43 may be connected to the distribution panel 45.

The main controller 44 may electrically connect the combiner 42, the distribution panel 45, the energy storage system 46, the power grid 47, and the sub-panel to each other. The main controller 44 may supply power provided from the combiner 42, the energy storage system 46, and/or the power grid 47 to at least one non-backup load via the distribution panel 45, and to the backup load via the sub-panel.

In an embodiment, the power supply system 40 may further include a sub-panel that is connected to the main controller 44 and is distinct from the distribution panel 45, and the power grid 47 may be connected to the distribution panel 45 rather than the main controller 44. That is, the main controller 44 may electrically connect the combiner 42, the distribution panel 45, the energy storage system 46, and the sub-panel to each other, and the distribution panel 45 may electrically connect the main controller 44, the non-backup load, and the power grid 47 to each other.

For example, the power supply system 40 may be implemented by connecting the main controller 44, which connects the combiner 42 to the energy storage system 46, to the distribution panel 45 pre-installed to connect at least one load 43 to the power grid 47.

Through this configuration, the power supply system 40 may reliably supply power to the load 43, such as a backup load, even in an off-grid environment in which stable power cannot be supplied from the power grid 47.

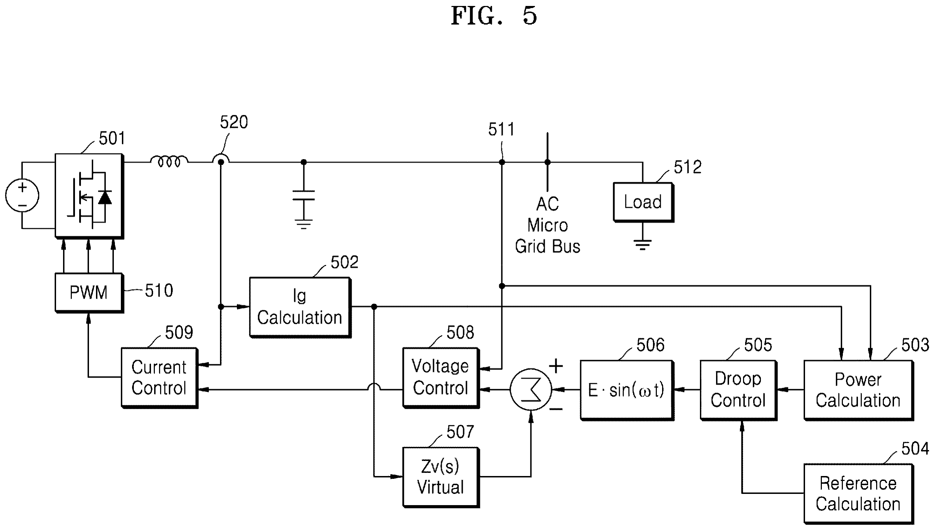

FIG. 5 is an exemplary diagram for describing a process of controlling a switch included in an inverter when a voltage sensor is connected to a second terminal according to an embodiment.

Referring to FIG. 5, a switch 501, a single current sensor 520, a voltage sensor 511, a load 512, a current calculation unit 502, a power calculation unit 503, a reference command value calculation unit 504, droop control units 505 and 506, a virtual impedance calculation unit 507, a voltage control unit 508, a current control unit 509, and a pulse-width modulation (PWM) unit 510 are illustrated. For example, the components illustrated in FIG. 5 may be included in each of the energy storage systems 17, 35, and 46 respectively shown in FIGS. 1, 3, and 4.

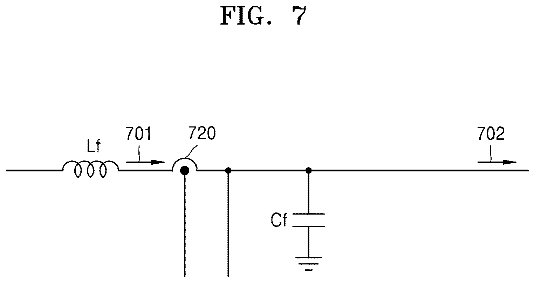

According to an embodiment, the processor 18 may first obtain a first current value at a first terminal of a filter included in the inverter from the single current sensor 520 connected to the first terminal. In addition, the processor 18 may obtain a second current value at a second terminal of the filter from the current calculation unit 502, based on the first current value. A detailed process of obtaining the second current value will be described later with reference to FIG. 7.

Here, the first terminal of the filter may refer to a node connected between the filter and the switch 501, and the second terminal of the filter may refer to a node connected between the filter and the load 512.

Next, the processor 18 may control the switch 501 included in the inverter according to a PWM method, based on the first current value and the second current value.

Hereinafter, a method for controlling the switch 501 included in the inverter by the processor 18 will be described in detail.

According to an embodiment, the processor 18 may first calculate active and reactive power values at the second terminal using the power calculation unit 503, based on the second current value.

For example, the processor 18 may calculate the active and reactive power values based on phase information of a voltage value obtained from the voltage sensor 511 connected to the second terminal and the second current value.

Next, the processor 18 may generate a voltage command value and an angular velocity command value at the second terminal using the droop control units 505 and 506, based on the active and reactive power values and a reference command value.

For example, the processor 18 may generate the angular velocity command value at the second terminal through a P-$\omega$ droop control method and may generate the voltage command value at the second terminal through a Q-V droop control method.

Here, the term "droop control" may refer to an autonomous distributed control technique used in a power conversion system to enable load sharing of the load 512 and to maintain voltage and frequency stability. In addition, the term "reference command value" may refer to a target value used as a reference in droop control, and may represent at least one of voltage, frequency, active power, and reactive power in a steady state. The reference command value may be calculated by the reference command value calculation unit 504.

Next, the processor 18 may calculate a virtual impedance voltage using the virtual impedance calculation unit 507, based on a preset virtual impedance value and the second current value. In an embodiment, the processor 18 may calculate the virtual impedance voltage by multiplying the virtual impedance value and the second current value. Here, the preset virtual impedance value may refer to a value set to compensate for an imbalance in the second current value.

Next, the processor 18 may generate a current command value using the voltage control unit 508, based on the voltage command value and the virtual impedance voltage. In an embodiment, the processor 18 may generate the current command value so as to minimize a control error of the current control unit 509.

Next, the processor 18 may generate a PWM command value using the current control unit 509, based on the current command value and the first current value. In an embodiment, the processor 18 may compare the current command value with the first current value, and the current control unit 509 may generate the PWM command value based on an error corresponding to a difference between the current command value and the first current value.

Next, the processor 18 may control the switch 501 included in the inverter using the PWM unit 510, based on the PWM command value. In an embodiment, the processor 18 may rapidly turn the switch 501 on and off according to the PWM command value so that an average voltage reaches the target value. The generated PWM command value may be in the form of a PWM signal, and the processor 18 may control the switch 501 using the PWM signal and adjust the magnitude and frequency of an output voltage.

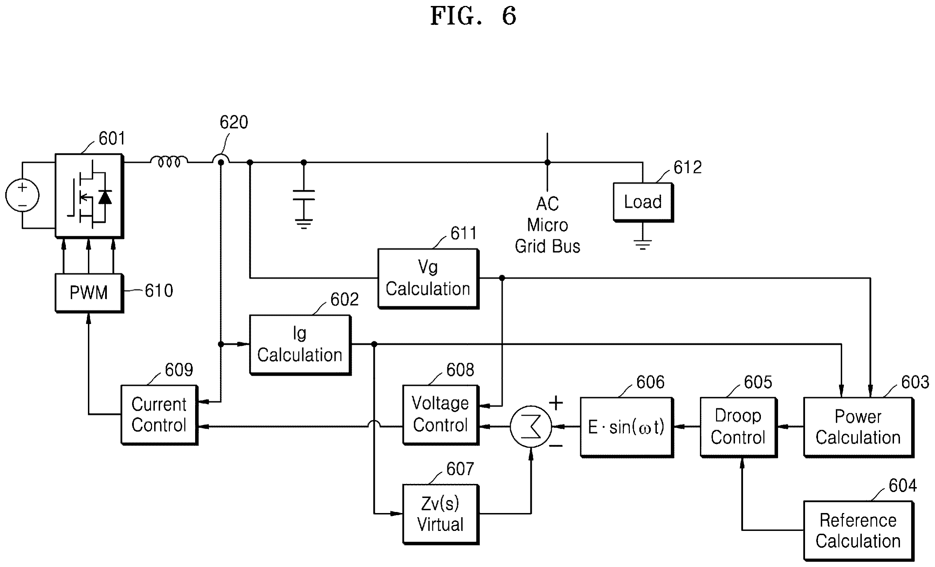

FIG. 6 is an exemplary diagram for describing a process of controlling a switch included in an inverter when a voltage sensor is connected to a first terminal of a filter according to an embodiment.

Referring to FIG. 6, a switch 601, a single current sensor 620, a load 612, a current calculation unit 602, a power calculation unit 603, a reference command value calculation unit 604, droop control units 605 and 606, a virtual impedance calculation unit 607, a voltage control unit 608, a current control unit 609, a PWM unit 610, and a voltage calculation unit 611 are illustrated. For example, the components illustrated in FIG. 6 may be included in each of the energy storage systems 17, 35, and 46 respectively shown in FIGS. 1, 3, and 4.

Unlike the voltage sensor 511 shown in FIG. 5, in the present embodiment, the voltage sensor is connected to the first terminal of the filter. In the present disclosure, by connecting the voltage sensor to the first terminal of the filter, the processor 18 may calculate a voltage at the second terminal using the voltage calculation unit 611.

According to an embodiment, the processor 18 may first obtain a first current value at the first terminal of the filter included in the inverter from the single current sensor 620 connected to the first terminal. In addition, the processor 18 may obtain a second current value at a second terminal of the filter from the current calculation unit 602, based on the first current value. A detailed process of obtaining the second current value will be described later with reference to FIG. 7.

Next, the processor 18 may first calculate active and reactive power values at the second terminal using the power calculation unit 603, based on the second current value.

For example, the processor 18 may calculate the active and reactive power values based on phase information of a voltage value obtained from the voltage sensor connected to the first terminal and the second current value. For example, the processor 18 may calculate the voltage at the second terminal using the voltage calculation unit 611, based on the voltage at the first terminal obtained from the voltage sensor connected to the first terminal.

Next, the processor 18 may generate a voltage command value and an angular velocity command value at the second terminal using the droop control units 605 and 606, by applying a droop control method based on the active and reactive power values and a reference command value. Here, the term "reference command value" may refer to a target value used as a reference in droop control, and may represent at least one of voltage, frequency, active power, and reactive power in a steady state. The reference command value may be calculated by the reference command value calculation unit 604.

For example, the processor 18 may generate the angular velocity command value at the second terminal through a P-$\omega$ droop control method and may generate the voltage command value at the second terminal through a Q-V droop control method.

Next, the processor 18 may calculate a virtual impedance voltage using the virtual impedance calculation unit 607, based on a preset virtual impedance value and the second current value.

For example, the processor 18 may calculate the virtual impedance voltage by multiplying the virtual impedance value and the second current value. Here, the preset virtual impedance value may refer to a value set to compensate for an imbalance in the second current value.

Next, the processor 18 may generate a current command value using the voltage control unit 608, based on the voltage command value and the virtual impedance voltage. For example, the processor 18 may generate the current command value so as to minimize a control error of the current control unit 609.

Next, the processor 18 may generate a PWM command value using the current control unit 609, based on the current command value and the first current value. In an embodiment, the processor 18 may compare the current command value with the first current value, and the current control unit 609 may generate the PWM command value based on an error corresponding to a difference between the current command value and the first current value.

Next, the processor 18 may control the switch 601 included in the inverter using the PWM unit 610, based on the PWM command value. For example, the processor 18 may rapidly turn the switch 601 on and off according to the PWM command value so that an average voltage reaches the target value. The generated PWM command value may be in the form of a PWM signal, and the processor 18 may control the switch 601 using the PWM signal and adjust the magnitude and frequency of an output voltage.

FIG. 7 is an exemplary diagram for describing a process of obtaining a second current value according to an embodiment.

Referring to FIG. 7, a first current value 701, a second current value 702, and a single current sensor 720 are illustrated. For example, the single current sensor 720 shown in FIG. 7 may correspond to the single current sensor 520 shown in FIG. 5 or the single current sensor 620 shown in FIG. 6.

According to an embodiment, the processor 18 may obtain the second current value 702 by adding the first current value 701 and a third current value. Here, the third current value may refer to a current flowing through a capacitor.

For example, the processor 18 may obtain the first current value 701 from the single current sensor 720, the first current value 701 corresponding to a current flowing through the first terminal. Next, the processor 18 may calculate the third current value.

The third current value may be expressed as Equation 1 below.

[Equation 1]

$$\text{Third current value} = 2*\pi*f*C*V_{peak}.$$

Here, f denotes a frequency of an AC voltage applied across the capacitor, C denotes a capacitance of the capacitor, $V_{peak}$ denotes a peak value of the AC voltage across the capacitor, and π denotes the mathematical constant pi.

Next, the processor 18 may obtain the second current value 702 by adding the third current value to the first current value 701 obtained from the single current sensor. Here, the second current value 702 may represent a current flowing to the load side, or may represent a current flowing through the second terminal.

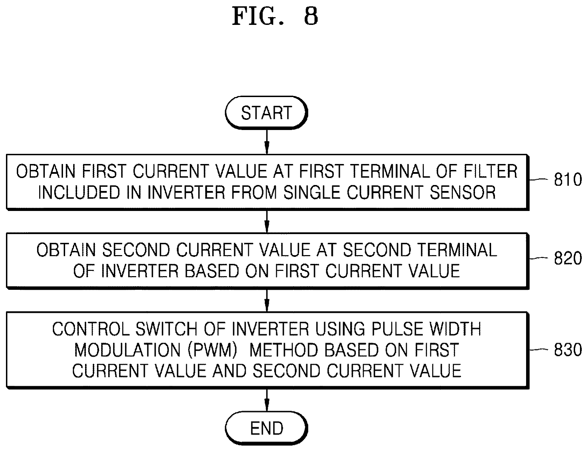

FIG. 8 is a flowchart for describing a process of obtaining a second current value according to an embodiment.

Referring to FIG. 8, in operation 810, the processor 18 may obtain a first current value 701 at the first terminal of the filter included in the inverter from the single current sensor.

In operation 820, the processor 18 may obtain a second current value 702 at the second terminal of the filter based on the first current value. According to an embodiment, the processor 18 may obtain the second current value 702 by adding the first current value 701 and a third current value. A more detailed process of obtaining the second current value 702 may be found with reference to FIG. 7.

In operation 830, the processor 18 may control the switch included in the inverter using a PWM method, based on the first current value 701 and the second current value 702. A detailed method for controlling the switch may be found with reference to FIGS. 5 to 7.

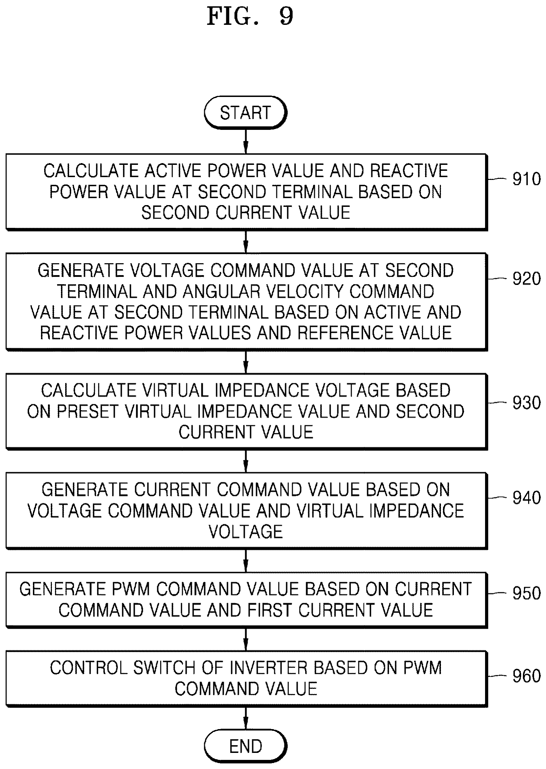

FIG. 9 is a flowchart for describing a method for controlling the switch included in the inverter according to an embodiment.

Referring to FIG. 9, in operation 910, the processor 18 may calculate active and reactive power values at the second terminal based on the second current value. For example, when the voltage sensor is connected to the second terminal, the processor 18 may calculate the active and reactive power values based on phase information between a voltage value obtained from the voltage sensor 511 connected to the second terminal and the second current value.

In contrast, when the voltage sensor is connected to the first terminal, the processor 18 may calculate active and reactive power values based on phase information between a voltage value of the second terminal and the second current value, wherein the voltage value of the second terminal may be obtained using the voltage calculation unit 611 and the voltage sensor connected to the first terminal.

In operation 920, the processor 18 may generate a voltage command value and an angular velocity command value at the second terminal based on the active and reactive power values and a reference command value. For example, the processor 18 may generate the angular velocity command value at the second terminal through a P-ω droop control method and may generate the voltage command value at the second terminal through a Q-V droop control method.

In operation 930, the processor 18 may calculate a virtual impedance voltage based on a preset virtual impedance value and the second current value.

In operation 940, the processor 18 may generate a current command value based on the voltage command value and the virtual impedance voltage. For example, the processor 18 may generate the current command value so as to minimize a control error of the current control unit.

In operation 950, the processor 18 may generate a PWM command value based on the current command value and the first current value. For example, the processor 18 may compare the current command value with the first current value, and the current control unit may generate the PWM command value based on an error corresponding to a difference between the current command value and the first current value.

In operation 960, the processor 18 may control the switch included in the inverter based on the PWM command value. A more detailed method for controlling the switch may be found with reference to FIGS. 5 to 7.

The above-described device may also be implemented as computer-readable code on a computer-readable recording medium. The computer-readable recording medium includes all types of storage devices that store data readable by a computer system. Examples of the computer-readable recording medium include read-only memory (ROM), random-access memory (RAM), compact disc (CD)-ROM, magnetic tape, floppy disk, an optical data storage device, and the like. The computer-readable recording medium may also be distributed over network-coupled computer systems so that the computer-readable code is stored and executed in a distributive manner. In addition, functional programs, codes, and code segments for implementing the above-described embodiments may be easily inferred by programmers of the technical field to which the present disclosure belongs.

The techniques described herein may be implemented by various means. For example, such techniques may be implemented in hardware, firmware, software, or a combination thereof. Those skilled in the art will understand that the various illustrative logical blocks, modules, circuits, and algorithm steps described in connection with the present disclosure may be implemented in electronic hardware, computer software, or a combination thereof. To clearly illustrate this mutual replacement between the hardware and software, various illustrative components, blocks, modules, circuits, and operations have been described above generally in terms of their functionality. Whether such functionality is implemented in hardware or software depends on specific applications and design requirements imposed on the overall system. Those skilled in the art may implement the described functionality in various ways for the specific applications, but such implementations should not be construed as departing from the scope of the present disclosure.

In hardware implementation, the processing units used to perform the techniques may be implemented with one or more ASICs, DSPs, digital signal processing devices (DSPDs), PLDs, FPGAs, processors, controllers, microcontrollers, microprocessors, electronic devices, other electronic units designed to perform the functions described in the present disclosure, computers, or a combination thereof.

Accordingly, the various exemplary logical blocks, modules, and circuits described in connection with the present disclosure may be implemented with or performed by processors, DSPs, ASICs, FPGAs, programmable logic devices, discrete gates, transistor logics, discrete hardware components, or any combination thereof designed to perform the functions described herein. A general-purpose processor may be a microprocessor, but alternatively, the processor may be any processor, controller, microcontroller, or state machine. The processor may also be implemented as a combination of computing devices, such as a DSP and a microprocessor, a plurality of microprocessors, one or more microprocessors in conjunction with a DSP core, or any other configurations.

In firmware and/or software implementation, the techniques may be implemented as instructions stored in a computer-readable medium such as RAM, ROM, nonvolatile random access memory (NVRAM), programmable read-only memory (PROM), erasable programmable read-only memory (EPROM), electrically erasable PROM (EEPROM), flash memory, CD, or a magnetic or optical data storage device. The instructions may be executable by one or more processors, and may cause the processor(s) to perform specific aspects of the functionality described in the present disclosure.

When implemented in software, the above-described techniques may be stored in or transmitted through computer-readable media as one or more instructions or codes. The computer-readable media include both computer storage media and communication media by including any media that facilitate the transfer of a computer program from one place to another. The storage media may be any available media that can be accessed by a computer. As non-limiting examples, these computer readable media may include RAM, ROM, EEPROM, CD-ROM or other optical disk storage, magnetic disk storage or other magnetic storage devices, or any other media that may be used to transport or store desired program codes in the form of instructions or data structures and may be accessed by a computer. Further, random access may be suitably made to computer-readable media.

For example, when software is transmitted from a website, server, or other remote source by using coaxial cable, fiber optic cable, twisted pair cable, digital subscriber line (DSL), or wireless technologies such as infrared rays, radio waves, and microwaves, these coaxial cable, fiber optic cable, twisted pair cable, digital subscriber line, or wireless technologies such as infrared rays, radio waves, and microwaves may be included in the definition of the media. As used herein, disks and discs include CD, laser disc, optical disc, digital versatile disc (DVD), floppy disk, and Blu-ray disc, and here, the disks usually reproduce data magnetically, whereas the discs reproduce data optically using lasers. Combinations thereof should also be included in the scope of the computer-readable media.

Software modules may be configured to reside in RAM memory, flash memory, ROM memory, EPROM memory, EEPROM memory, registers, hard disk, removable disk, CD-ROM, or any other form of known storage medium. An exemplary storage medium may be coupled to a processor so that the processor may read information from or write information in the storage medium. Alternatively, the storage medium may be integrated into the processor. The processor and the storage medium may be present within an ASIC. The ASIC may be present in a user terminal. Alternatively, the processor and the storage medium may be present as separate components in the user terminal.

The above description of the present disclosure is provided to enable those skilled in the art to make or use the present disclosure. Various modifications of the present disclosure will be readily apparent to those skilled in the art, and the general principles defined herein may be applied to various modifications without departing from the spirit or scope of the present disclosure. Thus, the present disclosure is not intended to be limited to the examples described herein but is intended to be accorded the broadest scope consistent with the principles and novel features disclosed herein.

Although the subject matter has been described in language specific to structural features and/or methodological acts, it is to be understood that the subject matter defined in the appended claims is not necessarily limited to the specific features or acts described. Rather, the specific features and acts are disclosed as example forms of implementing the claims.

Although the methods described in this specification have been explained with reference to specific embodiments, the methods may also be implemented as computer-readable code on a computer-readable recording medium. The computer-readable recording medium includes all types of storage devices that store data readable by a computer system. Examples of the computer-readable recording medium include ROM, RAM, CD-ROM, magnetic tape, floppy disk, an optical data storage device, and the like. The computer-readable recording medium may also be distributed over network-coupled computer systems so that the computer-readable code is stored and executed in a distributive manner. In addition, functional programs, codes, and code segments for implementing the above-described embodiments may be easily inferred by programmers of the technical field to which the present disclosure belongs.

According to the above-described technical solution of the present disclosure, switches included in an inverter in a power conversion system can be controlled using only a single current sensor.

Accordingly, the power conversion system can be designed to include only a single current sensor, thereby reducing installation costs.

While the present disclosure has been described herein in connection with some embodiments, various modifications and changes may be made without departing from the scope of the disclosure as will be understood by one of ordinary skill in the art to which the present disclosure belongs. Furthermore, such modifications and changes should be considered as falling within the scope of the claims appended to the present specification.

**Claims**

1.   A method for controlling a switch included in an inverter of a power conversion system, the method comprising:

   obtaining a first current value at a first terminal of a filter included in the inverter from a single current sensor;
   obtaining a second current value at a second terminal of the filter based on the first current value; and
   controlling the switch according to a pulse width modulation (PWM) method based on the first current value and the second current value.

2.   The method of claim 1, wherein the controlling includes:

   calculating an active power value and a reactive power value at the second terminal based on the second current value;
   generating a voltage command value at the second terminal and an angular velocity command value at the second terminal, based on the active power value, the reactive power value, and a reference command value;
   calculating a virtual impedance voltage based on a preset virtual impedance value and the second current value;
   generating a current command value based on the voltage command value and the virtual impedance voltage;
   generating a PWM command value based on the current command value and the first current value; and
controlling the switch based on the PWM command value.

3. The method of claim 2, wherein the calculating of the active power value and the reactive power value includes calculating the active power value and the reactive power value based on phase information between a voltage value, which is obtained from a voltage sensor connected to one of the first terminal and the second terminal, and the second current value.

4. The method of claim 2, wherein the generating of the voltage command value and the angular velocity command value includes adjusting, in real time, the voltage command value and the angular velocity command value using a droop control method to respond to load variations in the power conversion system.

5. The method of claim 2, wherein the preset virtual impedance value is set to compensate for an imbalance in the second current value.

6. The method of claim 2, wherein the generating of the current command value includes generating the current command value to minimize a control error of a current control unit.

7. The method of claim 1, wherein the single current sensor is connected to the first terminal.

8. A power conversion apparatus of a photovoltaic power generation system, the power conversion apparatus comprising a processor configured to obtain a first current value at a first terminal of a filter included in an inverter from a single current sensor, obtain a second current value at a second terminal of the filter included in the inverter based on the first current value, and control a switch according to a pulse width modulation (PWM) method based on the first current value and the second current value.

9. The power conversion apparatus of claim 8, wherein the processor is further configured to calculate an active power value and a reactive power value at the second terminal based on the second current value, generate a voltage command value at the second terminal and an angular velocity command value at the second terminal based on the active power value, the reactive power value, and a reference command value, calculate a virtual impedance voltage based on a preset virtual impedance value and the second current value, generate a current command value based on the voltage command value and the virtual impedance voltage, generate a PWM command value based on the current command value and the first current value, and control the switch based on the PWM command value.

10. The power conversion apparatus of claim 9, wherein the processor is further configured to calculate the active power value and the reactive power value based on phase information between a voltage value, which is obtained from a voltage sensor connected to one of the first terminal and the second terminal, and the second current value.

11. The power conversion apparatus of claim 9, wherein the processor is further configured to adjust, in real time, the voltage command value and the angular velocity command value using a droop control method to respond to load variations in the power conversion system.

12. The power conversion apparatus of claim 9, wherein the processor is further configured to set the preset virtual impedance value to compensate for an imbalance in the second current value.

13. The power conversion apparatus of claim 9, wherein the processor is further configured to generate the current command value to minimize a control error of a current control unit.

14. The power conversion apparatus of claim 8, wherein the single current sensor is connected to the first terminal.

15. A computer-readable recording medium recorded thereon a program for causing a computer to execute the method of claim 1.

FIG. 1

# FIG. 2

# FIG. 3

# FIG. 4

40

46
ENERGY
STORAGE
SYSTEM

41
PV   DEVICE

42
COMBINER

44
MAIN
CONTROLLER

47
GRID

45
DISTRIBUTION
PANEL

43
LOAD

# FIG. 5

EP 4 769 919 A1

FIG. 6

FIG. 7

# FIG. 8

START

OBTAIN FIRST CURRENT VALUE AT FIRST TERMINAL OF FILTER
INCLUDED IN INVERTER FROM SINGLE CURRENT SENSOR — 810

OBTAIN SECOND CURRENT VALUE AT SECOND TERMINAL
OF INVERTER BASED ON FIRST CURRENT VALUE — 820

CONTROL SWITCH OF INVERTER USING PULSE WIDTH
MODULATION (PWM) METHOD BASED ON FIRST
CURRENT VALUE AND SECOND CURRENT VALUE — 830

END

# FIG. 9

```
            ┌─────────┐
            │  START  │
            └────┬────┘
                 │
                 ▼
┌──────────────────────────────────────────┐
│  CALCULATE ACTIVE POWER VALUE AND REACTIVE │ ── 910
│     POWER VALUE AT SECOND TERMINAL BASED ON│
│           SECOND CURRENT VALUE             │
└──────────────────┬───────────────────────┘
                   │
                   ▼
┌──────────────────────────────────────────┐
│   GENERATE VOLTAGE COMMAND VALUE AT SECOND │ ── 920
│    TERMINAL AND ANGULAR VELOCITY COMMAND   │
│  VALUE AT SECOND TERMINAL BASED ON ACTIVE AND│
│   REACTIVE POWER VALUES AND REFERENCE VALUE │
└──────────────────┬───────────────────────┘
                   │
                   ▼
┌──────────────────────────────────────────┐
│   CALCULATE VIRTUAL IMPEDANCE VOLTAGE BASED│ ── 930
│  ON PRESET VIRTUAL IMPEDANCE VALUE AND SECOND│
│            CURRENT VALUE                    │
└──────────────────┬───────────────────────┘
                   │
                   ▼
┌──────────────────────────────────────────┐
│   GENERATE CURRENT COMMAND VALUE BASED ON  │ ── 940
│  VOLTAGE COMMAND VALUE AND VIRTUAL IMPEDANCE│
│                VOLTAGE                      │
└──────────────────┬───────────────────────┘
                   │
                   ▼
┌──────────────────────────────────────────┐
│  GENERATE PWM COMMAND VALUE BASED ON CURRENT│ ── 950
│   COMMAND VALUE AND FIRST CURRENT VALUE    │
└──────────────────┬───────────────────────┘
                   │
                   ▼
┌──────────────────────────────────────────┐
│   CONTROL SWITCH OF INVERTER BASED ON PWM  │ ── 960
│             COMMAND VALUE                  │
└──────────────────┬───────────────────────┘
                   │
                   ▼
            ┌─────────┐
            │   END   │
            └─────────┘
```

Europäisches
Patentamt

European
Patent Office

Office européen
des brevets

# EUROPEAN SEARCH REPORT

**Application Number**

EP 25 21 0289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | P. CORTES ET AL: "Model Predictive Control of an Inverter With Output Filter for UPS Applications", IEEE TRANSACTIONS ON INDUSTRIAL ELECTRONICS IEEE SERVICE CENTER, PISCATAWAY, NJ., USA, vol. 56, no. 6, 1 June 2009 (2009-06-01), pages 1875-1883, XP011252783, ISSN: 0278-0046, DOI: 10.1109/TIE.2009.2015750 | 1,8 | INV. H02M1/00 H02M7/5387 H02M7/5395 H02J3/38 |
| A | * abstract * * Section II A. Discrete-Time Model of the Filter and Equations 5, 11 and 21; figure 1 * | 2-7,9-15 | |
| | ----- | | |
| X | CHEN ZHI ET AL: "An Adaptive Virtual Resistor (AVR) Control Strategy for Low-Voltage Parallel Inverters", IEEE TRANSACTIONS ON POWER ELECTRONICS INSTITUTE OF ELECTRICAL AND ELECTRONICS ENGINEERS, USA, vol. 34, no. 1, 1 January 2019 (2019-01-01), pages 863-876, XP011697105, ISSN: 0885-8993, DOI: 10.1109/TPEL.2018.2815284 [retrieved on 2018-11-27] * abstract; figures 1, 2 * | 1-15 | TECHNICAL FIELDS SEARCHED (IPC) H02M |
| | ----- | | |
| | -/-- | | |

The present search report has been drawn up for all claims

| Place of search | Date of completion of the search | Examiner |
|---|---|---|
| The Hague | 13 March 2026 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

EUROPEAN SEARCH REPORT

Europäisches
Patentamt
European
Patent Office
Office européen
des brevets

**Application Number**

EP 25 21 0289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIA YAOQIN ET AL: "Adaptive Time Constant Control Strategy for Micro-Grid Based on Improved Droop Control", 2020 IEEE/IAS INDUSTRIAL AND COMMERCIAL POWER SYSTEM ASIA (I&CPS ASIA) IEEE, 13 July 2020 (2020-07-13), pages 1210-1215, XP033832629, DOI: 10.1109/ICPSASIA48933.2020.9208487 [retrieved on 2020-09-28] * abstract; figures 1, 2, 4 * ----- | 1-15 | |

TECHNICAL FIELDS SEARCHED (IPC)

The present search report has been drawn up for all claims

| Place of search | Date of completion of the search | Examiner |
|---|---|---|
| The Hague | 13 March 2026 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)